# EUROPEAN PATENT APPLICATION

(11) **EP 2 915 905 A1**
(43) Date of publication of application: **09.09.2015**
(21) Application number: 12887520.0
(22) Date of filing: 28.12.2012
(51) Int. Cl.: C23C 30/00, C23C 22/00

(54) **METHOD FOR PREPARING OF COMPOSITION FOR SURFACE TREATMENT OF METAL, SURFACE-TREATED STEEL SHEET USING SAME AND METHOD FOR MANUFACTURING SAME**

(30) Priority: 01.11.2012 KR 20120122931
(71) Applicant: Posco, Gyeongsangbuk-do 790-300 (KR)
(72) Inventor: JEONG, Hyun-Ju, Incheon 406-840 (KR); CHOI, Jae-Hun, Pohang-si Kyungsangbook-do 790-360 (KR); KIM, Byeng-Su, Pohang-si Kyungsangbook-do 790-360 (KR); KIM, Hyun-Tae, Pohang-si Kyungsangbook-do 790-360 (KR); LEE, Jae-Kon, Pohang-si Kyungsangbook-do 790-360 (KR)
(74) Representative: Zech, Stefan Markus
(86) International application number: PCT/KR2012/011755
(87) International publication number: WO 2014/069716

(57) **Abstract**

The present invention relates to a method for preparing a composition for the surface treatment of metal, a surface-treated steel sheet which is surface-treated with the composition and to a method for manufacturing the surface-treated steel sheet. To accomplish the objective, the method of the present invention may involve the preparing of a composition for the surface treatment of metal using graphene having superior characteristics such as corrosion resistance, electrical conductivity and thermal conductivity. The composition may be effectively coated onto the metal surface by means of electrophoresis, and thus a highly functional surface-treated steel sheet can be obtained.

## Description

### [Technical Field]

The present disclosure relates to a method for preparing a composition for a metal surface treatment, a steel sheet surface treated with the composition, and a method for manufacturing the surface treated steel sheet.

### [Background Art]

Generally, steel sheets for applications such as automobile panels are treated with phosphates and are painted after a car body assembly process in automotive manufacturer plants. In this case, steel sheets formed as automobile panels have many folded portions, and since it may be difficult for phosphates or paint to permeate into the folded portions, the folded portions may be vulnerable to corrosion.

In the related art, a method of sealing folded portions of steel sheets has been used to prevent corrosion-causing substances from permeating into the folded portions. However, since the method decreases final product productivity and increases manufacturing costs, surface-treated steel sheets having a high degree of corrosion resistance and thus not requiring a sealing treatment have been demanded.

Recently, steel sheets having plating layers such as zinc plating layers or steel sheets having organic coating layers have been widely researched as surface-treated steel sheets not requiring a sealing treatment. As a result, surface-treated steel sheets coated with organic layers to a certain thickness have been developed to the stage of commercialization.

However, when plated steel sheets are manufactured by immersing steel sheets in a plating bath, since the plating bath contains large amounts of oxide-forming elements such as zinc (Zn), aluminum (Al), or magnesium (Mg), oxide-forming elements diffuse into the surfaces of the steel sheets and form oxides, thereby degrading the platability of the steel sheets and causing separation of plating layers.

Although surface-treated steel sheets having organic coating layers have corrosion resistance even in portions thereof not painted or treated with a phosphate, weldability of the steel sheets in an electric resistance welding process may be poor due to the organic coating layers being relatively thick.

Therefore, a steel sheet surface-treated with graphene is required, as graphene improves the corrosion resistance and the weldability of steel by the effect of its high electric conductivity or thermal conductivity without affecting the processability of steel.

### [Disclosure]

### [Technical Problem]

Aspects of the present disclosure may provide a composition for a metal surface treatment, a high-performance steel sheet surface treated with the composition, and a method for manufacturing the surface treated steel sheet.

### [Technical Solution]

According to an aspect of the present disclosure, a method for preparing a composition for a metal surface treatment may include: preparing a graphene solution from graphite; and preparing graphene-metal mixtures by adding a metallic material and an organic solvent to the graphene solution and mixing the metallic material, the organic solvent, and the graphene solution.

According to another aspect of the present disclosure, a method for manufacturing a high-performance surface-treated steel sheet may include: coating a base steel sheet with the composition for a metal surface treatment; and drying the coated base steel sheet.

According to another aspect of the present disclosure, a high-performance surface-treated steel sheet may include a base steel sheet and a graphene layer formed on the base steel sheet.

### [Advantageous Effects]

According to the present disclosure, steel may be effectively coated with graphene having desired characteristics such as a high degree of electric conductivity by an electrophoretic deposition (EPD) method so as to provide a high-performance surface-treated steel sheet having characteristics such as high corrosion resistance, electric conductivity, or thermal conductivity.

### [Description of Drawings]

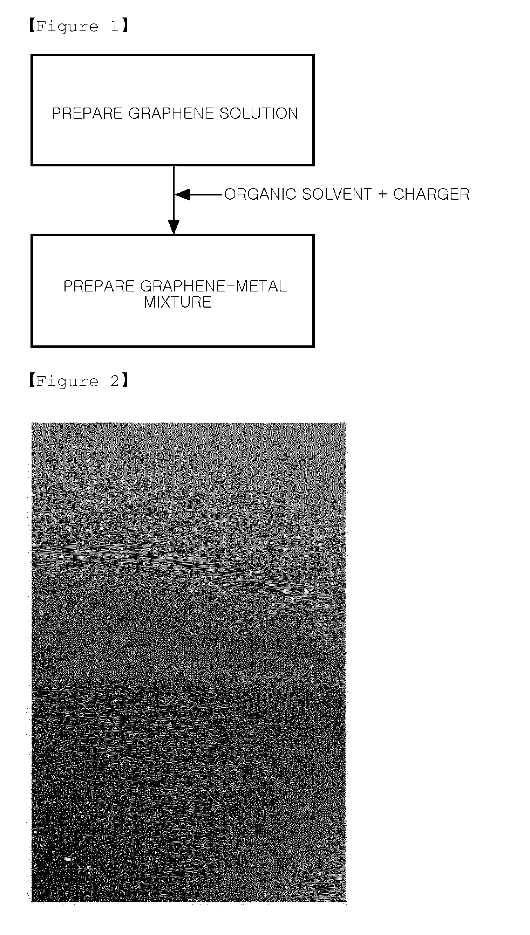

FIG. 1 is a flowchart illustrating a method for preparing a composition for a metal surface treatment according to an exemplary embodiment of the present disclosure.
FIG. 2 illustrates results of observation of a surface of SUS304 after being treated with a metal surface treatment composition (including a 0.25 wt% reduced graphene oxide (RGO) solution and 1 wt% magnesium nitrate) by an electrophoretic deposition (EPD) method under conditions of voltage: 15 V, electrode gap: 5 mm, and coating process time: 3 seconds.

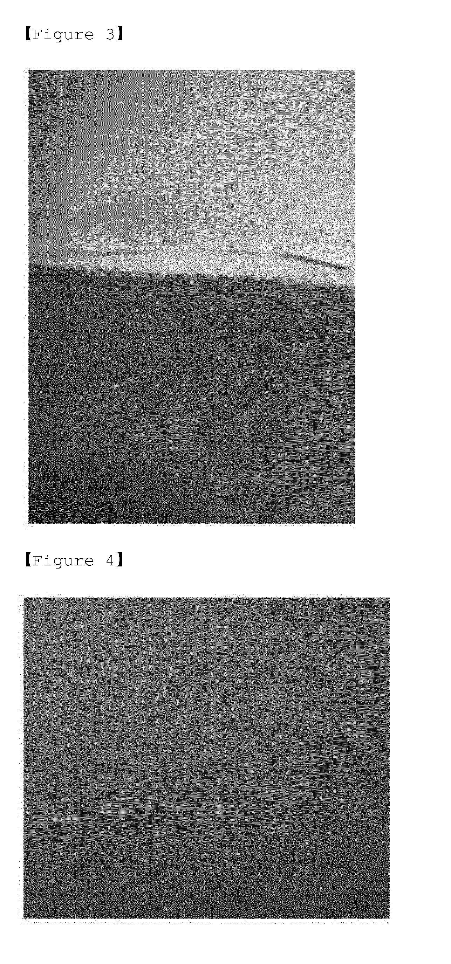

FIG. 3 illustrates results of observation of a surface of carbon steel after the carbon steel was treated with a metal surface treatment composition (including 1.0 wt% graphene powder/platelets and 1.0 wt% nickel chloride) by an EPD method under conditions of voltage: 15 V, electrode gap: 5 mm, and coating process time: 2 seconds.
FIG. 4 illustrates results of observation of a surface of SUS304 after being treated with a metal surface treatment composition (including a 0.25 wt% RGO solution and 2.5 wt% magnesium nitrate) by an EPD method under conditions of voltage: 15 V, electrode gap: 5 mm, and coating process time: 5 seconds.

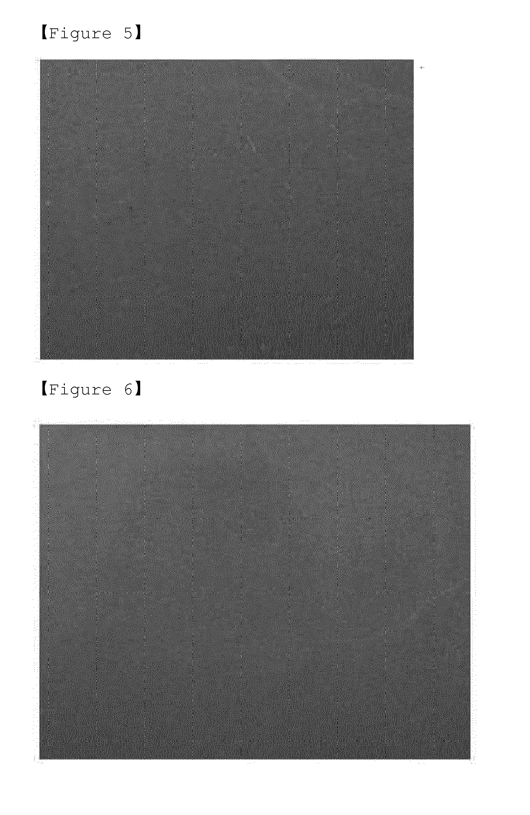

FIG. 5 illustrates results of observation of a surface of SUS304 after being treated with a metal surface treatment composition (including 5.0 wt% graphene powder/platelets and 10 wt% magnesium nitrate) by an EPD method under conditions of voltage: 15 V, electrode gap: 5 mm, and coating process time: 5 seconds.
FIG. 6 illustrates results of observation of a surface of SUS304 after being treated with a metal surface treatment composition (including 2.5 wt% graphene powder/platelets and 2.5 wt% nickel chloride) by an EPD method under conditions of voltage: 15 V, electrode gap: 5 mm, and coating process time: 2 seconds.

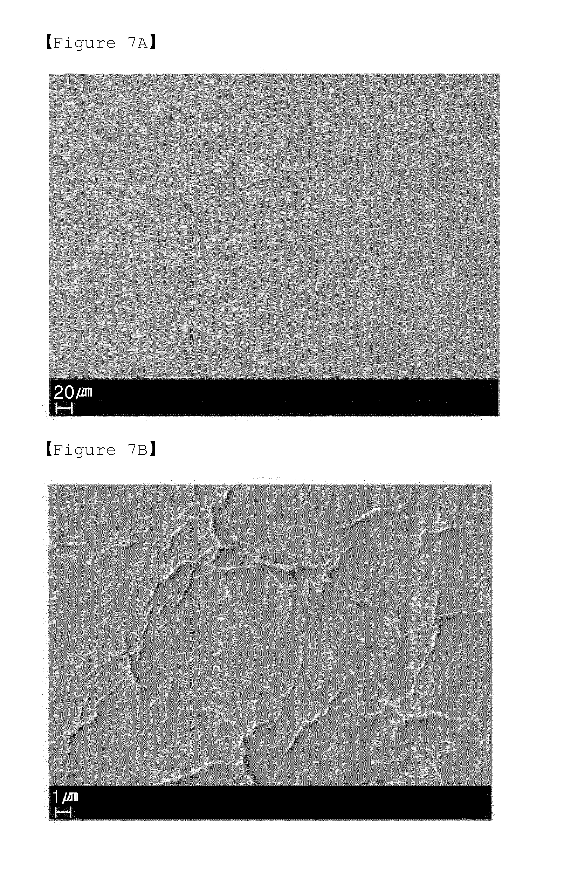

FIGS. 7A and 7B illustrate images of a surface of SUS304 taken with a field emission scanning electron microscope (FESEM) at magnifications of 500X (FIG. 7A) and 10000X (FIG. 7B) after SUS304 was treated with a metal surface treatment composition (including a 0.25 wt% RGO solution and 0.2 wt% magnesium nitrate) by an EPD method under conditions of voltage: 15 V, electrode gap: 5 mm, and coating process time: 1 second.

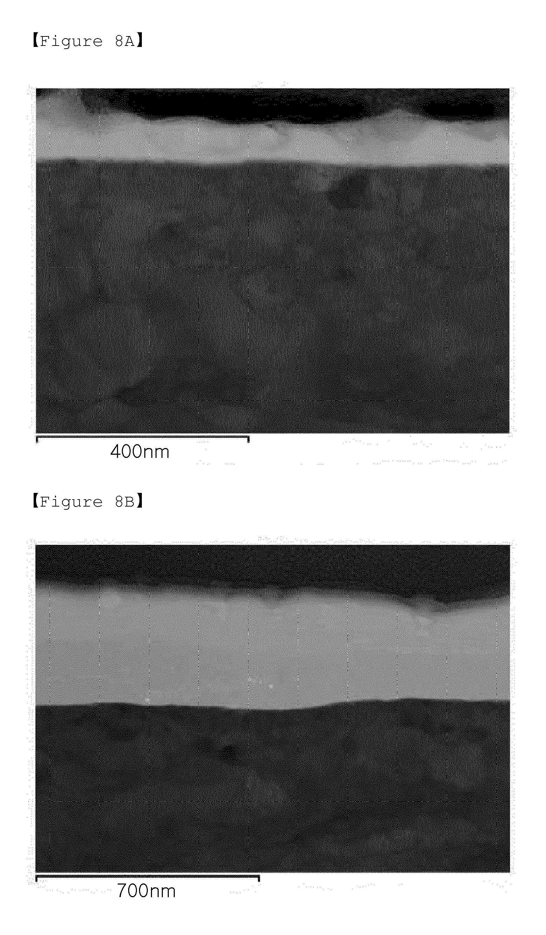

FIGS. 8A and 8B are field emission scanning electron microscope (FESEM) images of SUS304 treated with a metal surface treatment composition including a 0.25 wt% RGO solution and 0.2 wt% magnesium nitrate (FIG. 8A) and a metal surface treatment composition including a 0.25 wt% RGO solution and 1.0 wt% magnesium nitrate (FIG. 8B) by an EPD method under conditions of voltage: 15 V, electrode gap: 5 mm, and coating process time: 1 second.

### [Best Mode]

The inventors have found that if a surface treatment composition is prepared using graphene, considered to be an important future industrial material, and if a steel sheet is coated with a graphene layer using the composition instead of, or in addition to, coating the steel sheet with a conventional plating layer or organic coating layer, the graphene layer has good deposition characteristics and improves characteristics of the steel sheet such as corrosion resistance. Based on this knowledge, the inventors have invented the present invention.

Graphene is a material formed of carbon atoms in the form of a thin layer which has a thickness of a single carbon atom and a two-dimensional structure in which carbon atoms are bonded together in a hexagonal honeycomb shape, and it is known that graphene has a high degree of electric and thermal conductivity and a high degree of mechanical strength.

If a base steel sheet is coated with a graphene layer, the inherent characteristics of graphene are imparted to the steel sheet, and thus the steel sheet may have improved characteristics such as corrosion resistance and electric conductivity as compared to conventionally surface-treated steel sheets.

Therefore, a surface-treated steel sheet of the present disclosure includes a base steel sheet and a graphene layer formed on the base steel sheet. The base steel sheet may be any steel sheet such as a normal steel sheet (non-plated steel sheet), a plated steel sheet, or a steel sheet coated with an organic coating layer. However, the base steel sheet may be a normal steel sheet or a plated steel sheet.

A method of preparing graphene and coating a base steel sheet with the graphene may be first considered as a method for manufacturing the surface-treated steel sheet of the present disclosure.

Methods such as a physical stripping method, a direct growth method, and a chemical stripping method have been known as methods for preparing graphene.

The physical stripping method is a method of separating a single layer of graphene from graphite by using the adhesive strength of cellophane tape. Although graphene is easily obtained by the physical stripping method, the physical stripping method is not suitable for mass production.

The most typical type of direct growth method is a chemical vapor deposition (CVD) method using a transition metal layer, such as a nickel or copper layer, as a catalyst layer. The CVD method is a method of synthesizing a desired compound through a chemical reaction on a surface of a substrate. In the CVD method, a catalyst layer such as a nickel or copper layer is formed on a substrate, carbon is deposited on the catalyst layer by injecting a high-temperature gas, and the catalyst layer is removed to ultimately separate graphene. The CVD method enables the production of high-quality graphene. However, the CVD method requires a high-temperature process, and only a transition metal has to be used to form a catalyst layer in the CVD method. Therefore, the CVD method has limitations as a surface treatment method for steel sheets.

Examples of the chemical stripping method include an oxidation-reduction method and a non-oxidation method. The oxidation-reduction method is a method for obtaining graphene by oxidizing graphite and then breaking the oxidized graphite, for example, using ultrasonic waves. In the oxidation-reduction method, graphene is produced in an aqueous solution and is then treated with a reducing agent to obtain a reduced graphene oxide (RGO). In the non-oxidation method, graphite is not oxidized but is directly dispersed as graphene by using an agent such as a surfactant.

A surface-treated steel sheet may be manufactured by coating a base steel sheet with graphene or a graphene solution obtained by one or more of the above-described methods. In this case, however, it is difficult to rapidly treat a large area of a base steel sheet with graphene, and the adhesion between the graphene and the base steel sheet is poor. In addition, sufficient durability or corrosion resistance is not achieved.

Thus, the inventors have tried to solve these problems and found that if graphene reacts with the surface of a steel sheet when the steel sheet is coated with graphene, the adhesion between a graphene coating layer and the steel sheet is enhanced. Based on this knowledge, the inventors have also proposed a graphene composition for coating a steel sheet and a method for preparing the graphene composition.

First, a method for preparing a composition for a metal surface treatment will be described in detail according to an aspect of the present disclosure.

As illustrated in FIG. 1, the method for preparing a composition for a metal surface treatment may include preparing a graphene solution from graphite (S11) and preparing a graphene-metal mixture by adding a metallic material and an organic solvent to the graphene solution and mixing the metallic material, the organic solvent, and the graphene solution (S12).

The method for preparing a composition for a metal surface treatment will now be described in greater detail, according to the aspect of the present disclosure.

First, a graphene solution is prepared from graphite (S11).

According to the present disclosure, the graphene solution may be a reduced graphene oxide (RGO) solution or graphene powder/platelets (having a plate shape). If the graphene solution is an RGO solution, the content of graphene in the graphene solution may preferably be 0.1 wt% to 2.0 wt% and more preferably 0.2 wt% to 0.5 wt%, and if the graphene solution is graphene powder/platelets, the content of graphene in the graphene solution may preferably be 0.1 wt% to 20 wt% and more preferably 0.2 wt% to 10 wt%. The above-mentioned graphene content ranges are optimal ranges for guaranteeing uniform and compact deposition of graphene on a base steel sheet in a later coating process. That is, if the graphene content of the graphene solution is within the above-mentioned ranges, a coating layer may be compactly formed on a base steel sheet, and thus desired effects may be obtained.

In the above, the graphene may be obtained by a chemical stripping method which is a graphene production method. Examples of the chemical stripping method include an oxidation-reduction method known as Hummer's method, and a non-oxidation method.

In the oxidation-reduction method, graphite is oxidized and pulverized, for example, using ultrasonic waves to obtain a graphene oxide (GO) dispersed in an aqueous solution, and the graphene oxide (GO) is thermally expanded and reduced using a reducing agent to obtain graphene in the form of an RGO. In the non-oxidation method, graphite is not oxidized but is directly dispersed using an agent such as a surfactant so as to obtain a thin layer of graphene powder/platelets.

Thereafter, the graphene solution may be purified.

The graphene solution may be purified to increase the purity of the graphene obtained from graphite, and any graphene purification method may be used to purify the graphene solution. That is, a method of purifying the graphene solution is not limited.

Thereafter, an organic solvent and a metallic material are added to and mixed with the graphene solution so as to form a graphene-metal mixture (S12). The graphene-metal mixture refers to a substance obtained by adding charged particles or radicals to graphene which generally has no charge. The charged particles or radicals may include at least one metal selected from the group consisting of magnesium (Mg), nickel (Ni), zinc (Zn), copper (Cu), and chromium (Cr).

In more detail, the metallic material may include at least one compound selected from the group consisting of magnesium nitrate (Mg(NO₃)₂.H₂O), nickel chloride (NiCl₂.6H₂O), zinc chloride (ZnCl₂), copper nitrate (Cu(No₃)₂.6H₂O), and chromic nitrate (Cr(NO₃)₃.9H₂O).

Any kind of solution may be used to disperse the metallic material and the graphene solution. For example, a solution allowing dispersion of the metallic material therein and uniformly mixable with the graphene solution may be used. For this, an organic solvent such as ethanol or isopropyl alcohol may be used.

The graphene-metal mixture may be obtained by mixing the metallic material, the organic solvent, and the graphene solution using a tool such as a blade.

In this case, if the graphene solution is a RGO solution, since the graphene content of the graphene solution is 0.1 wt% to 2.0 wt% and more preferably 0.2 wt% to 0.5 wt%, the metallic material may be added in an amount of 0.1 wt% to 10 wt% and more preferably in an amount of 0.2 wt% to 5.0 wt%. In addition, if the graphene solution is graphene powder/platelets, since the graphene content of the graphene solution is 0.1 wt% to 20 wt% and more preferably 0.2 wt% to 10 wt%, the metallic material may be added in an amount of 0.1 wt% to 40 wt% and more preferably in an amount of 0.2 wt% to 20 wt%. When the graphene-metal mixture is prepared, the content of the metallic material relative to the content of graphene in the graphene solution may be adjusted according to a graphene layer to be formed. For example, if it is intended to form a pure graphene layer on a base steel sheet, the metallic material and graphene may be mixed, preferably at a ratio of about 1:1, and if it is intended to form a graphene-metal composite layer on a base steel sheet, the metallic material and graphene may be mixed, preferably at a metallic material/graphene ratio of about 1:2 or greater. In this case, if the content of the metallic material is greater than the content of graphene, graphene may be more likely to be charged, and the deposition rate of graphene on a base steel sheet may be increased.

If mixing is performed for 10 minutes to 30 minutes, a sufficient amount of charged particles or radicals may be added to graphene surfaces, and the graphene-metal mixture prepared in this manner may include at least one selected from the group consisting of graphene-Mg, graphene-Ni, graphene-Zn, graphene-Cu, and graphene-Cr.

After the mixing, an ultrasonic treatment may be further performed to disperse graphene more uniformly in the solution. The ultrasonic treatment may be performed using any method. For example, an ultrasonicator may be used.

In this manner, charged metal ions may be intentionally adsorbed on non-charged graphene surfaces to obtained charged graphene.

A method for manufacturing a high-performance surface-treated steel sheet will now be described in detail according to an aspect of the present disclosure.

According to an exemplary embodiment of the present disclosure, the method for manufacturing a high-performance surface-treated steel sheet includes: coating a base steel sheet with the composition for a metal surface treatment (metal surface treatment composition); and drying the base steel sheet.

First, a base steel sheet is coated with the above-described metal surface treatment composition.

The base steel sheet may be any kind of steel sheet. Even a non-ferrous material containing a non-ferrous metal may be used.

Any method may be used for coating the base steel sheet with the metal surface treatment composition including the graphene-metal mixture as long as the entire area of the base steel sheet is uniformly coated with the graphene-metal mixture. For example, an electrophoretic deposition (EPD) method may be used for coating a large area.

As is known in the art, the EPD method is a technique using the electrostatic force of charged particles or radicals contained in an electrolyte solution so as to deposit the particles or radicals on a charged electrode surface. Such charged particles or radicals are known as chargers. EPD using positively charged chargers is known as cathodic EPD, and EPD using negatively charged chargers is known as anodic EPD. If the above-described EPD method is used, desired particles may be deposited at a high deposition rate to a height of several nanometers (nm) to several micrometers (µm). In addition, if the EPD method is used, even a porous or very rough surface of a material may be uniformly covered with desired particles.

According to the present disclosure, the base steel sheet may be coated with the metal surface treatment composition by the EPD method under the conditions of a low voltage of 50 V or lower and a high deposition rate of 0.1 µm/s to 1.0 µm/s, thereby forming a uniform graphene layer on the base steel. Owing to the graphene layer, the base steel sheet may have a highly corrosion-resistant, electrically-conductive, thermally-conductive surface.

Thereafter, the surface-treated base steel sheet may be dried.

At this time, any method used to dry normal steel sheets may be used. That is, drying of the surface-treated base steel sheet is not limited to a particular method.

As described above, the graphene-metal mixture is prepared by intentionally adsorbing metal ions on the surface of graphene having no charge, and the graphene charged in this manner is applied to the base steel sheet by the EPD method so that the charged graphene may be securely deposited on the base steel sheet without separation. Therefore, existing problems caused by a low degree of adhesion of deposited graphene may be removed.

In more detail, graphene may be deposited on the base steel sheet by the EPD method under the conditions of a low voltage of 100 V or lower, more preferably 50 V or lower, and a high deposition rate of 0.1 µm/s to 1.0 µm/s.

Hereinafter, a high-performance surface-treated steel sheet will now be described in detail according to an aspect of the present disclosure.

The surface-treated steel sheet of the present disclosure may include a base steel sheet and a graphene layer formed on the base steel sheet to a constant thickness.

The surface-treated steel sheet including the graphene layer may have high-level functional characteristics (such as corrosion resistance, electric conductivity, or thermal conductivity), and such functional characteristics of the surface-treated steel sheet may be present owing to the graphene layer deposited on the base steel sheet. The thickness of the graphene layer is not limited. However, it may preferable that the graphene layer have a thickness of 1 nm or greater and a uniform and compact structure for exhibiting characteristics of graphene.

In this manner, unique properties of graphene (gas barrier properties) that block even hydrogen may be imparted to the base steel sheet, and thus the corrosion-resistance and electric characteristics of the base steel sheet may be improved.

Hereinafter, the present disclosure will be described more specifically through examples.

The disclosure may, however, be exemplified in many different forms and should not be construed as being limited to specific embodiments or examples set forth herein. Rather, these embodiments or examples are provided so that the disclosure will be thorough and complete, and will fully convey the scope of the present invention to those skilled in the art.

### [Mode for Invention]

### (Examples)

First, the following graphene solutions prepared by separating graphene from graphite by a chemical stripping method were purchased: a reduced graphene oxide (RGO) solution manufactured using an oxidation method by Angstron Materials; and graphene powder/platelets (graphene nanoplatelets) manufactured by XG-SCIENCE.

Metal surface treatment compositions each including a graphene-metal mixture were prepared using the graphene solutions, an organic solvent, and chargers as illustrated in Tables 1 and 2.

Before the metal surface treatment compositions were prepared, the graphene powder/platelets (graphene nanoplatelets) prepared as a graphene solution were purified using a vacuum filter and ethanol of a purity of 90% or greater. Thereafter, as illustrated in Tables 1 and 2, metallic materials (chargers) and ethanol were added to the graphene solutions and mixed using a blade for 30 minutes to form graphene-metal mixtures. Next, the graphene-metal mixtures were treated with ultrasonic waves by using an ultrasonicator for one hour to finally form metal surface treatment compositions. Thereafter, base steel sheets were coated with the metal surface treatment compositions by an electrophoretic deposition (EPD) method, and then the base steel sheets were dried.

At that time, the EPD method was executed under conditions of STS304 or carbon steel was used as a cathode (base steel sheet); SUS304 was used as an anode; the gap between the cathode and the anode was adjusted to be 5 mm, 10 mm, or 15 mm; and a voltage of 12 V to 16 V was applied for 1 second to 20 seconds.

Steel sheet samples surface-treated as described above were observed with the naked eye as illustrated in FIGS. 2 to 6 and were observed using a scanning electron microscope (SEM) as illustrated in FIGS. 7A to 8B.

**[Table 1]**

| Items | Components | Amounts |
|---|---|---|
| Graphene solution | RGO solution | 0.1 to 2.0 wt% |
| Chargers | Magnesium nitrate (Mg(NO₃)₂.H₂0) | 0.1 to 10.0 g |
| | Nickel chloride (NiCl₂.H₂0) | |
| | Zinc sulfate (ZnSiO₂.6H₂O) | |
| Organic solvent | Ethanol | 5 to 20 ml |

**[Table 2]**

| Items | Components | Amounts |
|---|---|---|
| Graphene solution | Graphene powder/platelets | 0.1 to 20 wt% |
| Chargers | Magnesium nitrate (Mg(NO₃)₂.H₂0) | 0.1 to 40 g |
| | Nickel chloride (NiCl₂.H₂0) | |
| | Zinc sulfate (ZnSiO₂.6H₂O) | |
| Organic solvent | Ethanol | 5 to 20 ml |

FIG. 2 illustrates results of observation of a surface of SUS304 after being set as an anode and treated with a metal surface treatment composition including an RGO solution as a graphene solution (0.25 wt% RGO solution and 1 wt% magnesium nitrate) by an EPD method under conditions of voltage: 15 V, electrode gap: 5 mm, and coating process time: 3 seconds.

FIG. 3 illustrates results of observation of a surface of carbon steel after the carbon steel was set as a cathode and treated with a metal surface treatment composition including graphene powder/platelets as a graphene solution (1.0 wt% graphene powder/platelets and 1.0 wt% nickel chloride) by an EPD method under conditions of voltage: 15 V, electrode gap: 5 mm, and coating process time: 2 seconds.

FIG. 4 illustrates results of observation of a surface of SUS304 after being set as an anode and treated with a metal surface treatment composition (including a 0.25 wt% RGO solution and 2.5 wt% magnesium nitrate) by an EPD method under conditions of voltage: 15 V, electrode gap: 5 mm, and coating process time: 5 seconds.

FIG. 5 illustrates results of observation of a surface of SUS304 after being treated with a metal surface treatment composition (including 5.0 wt% graphene powder/platelets and 10 wt% magnesium nitrate) by an EPD method under conditions of voltage: 15 V, electrode gap: 5 mm, and coating process time: 5 seconds.

FIG. 6 illustrates results of observation of a surface of SUS304 after being treated with a metal surface treatment composition (including 2.5 wt% graphene powder/platelets and 2.5 wt% nickel chloride) by an EPD method under conditions of voltage: 15 V, electrode gap: 5 mm, and coating process time: 2 seconds.

As illustrated in FIGS. 2 to 6, when the metal surface treatment compositions each having a metallic material (charger)/graphene solution ratio of 1:1 or greater were used to coat base steel sheets, the base steel sheets were uniformly coated with graphene-metal mixtures.

In addition, coated surfaces were observed using a SEM.

FIGS. 7A and 7B are images of a surface of SUS304 taken with a SEM image at magnifications of 500X (FIG. 7A) and 10000X (FIG. 7B) after SUS304 was treated with a metal surface treatment composition (including a 0.25 wt% RGO solution and 0.2 wt% magnesium nitrate) by an EPD method under conditions of voltage: 15 V, electrode gap: 5 mm, and coating process time: 1 second.

Referring to the 500X enlarged image, the surface was relatively uniformly coated with a graphene-metal mixture, and referring to the 10000X enlarged image, fine wrinkles were observed.

FIG. 8A is a SEM image showing a section of the sample shown in FIGS. 7A and 7B, and FIG. 8B is a SEM image showing a section of SUS304 after being treated with a metal surface treatment composition (including a 0.25 wt% RGO solution and 1.0 wt% magnesium nitrate) by an EPD method under conditions of voltage: 15 V, electrode gap: 5 mm, and coating time: 1 second.

FIGS. 8A and 8B show examples for comparing deposition rates according to the ratio of a graphene solution and a charger. Referring to FIGS. 8A and 8B, as the amount of magnesium nitrate functioning as a charger was increased, the rate of deposition was increased: a coating layer shown in FIG. 8B is thicker than a coating layer shown in FIG. 8A.

According to results of EDS analysis on the samples, 80% RGO was observed when a metallic material (charger)/graphene solution ratio was about 1:1, and the amount of a metallic material (charger) was relatively increased when the metallic material/graphene solution ratio was 1:2 or greater.

As shown by the results of energy dispersive spectroscopy (EDS) analysis, if the content ratio of a graphene solution and a metallic material (charger) is adjusted, a pure graphene layer or a graphene-metal composite layer may be formed.

The metal surface treatment compositions of the present disclosure having component contents as shown in Tables 1 and 2 may have different optimal component content ratios depending on a solution used as a graphene solution. If the content of graphene is higher than the content of a metallic material (charger) in a graphene solution of a metal surface treatment composition, a surface treatment imparting unique characteristics of 90% or more graphene may be performed. In contrast, if the content of the metallic material (charger) is high, a graphene-metal mixture having characteristics of the metallic material may be used for surface treatment. When the graphene-metal mixture is coated on a base steel sheet, if the thickness of a graphene-metal mixture layer is excessively thick, the graphene-metal mixture layer may be stripped because of surface stress. Therefore, it may be necessary to determine an optimal coating thickness and time according to the composition of the graphene-metal mixture.

## Claims

1. A method for preparing a composition for a metal surface treatment, the method comprising:
preparing a graphene solution from graphite; and
preparing graphene-metal mixtures by adding a metallic material and an organic solvent to the graphene solution and mixing the metallic material, the organic solvent, and the graphene solution.

2. The method of claim 1, wherein the graphene solution is a reduced graphene oxide (RGO) solution or graphene powder/platelets.

3. The method of claim 2, wherein if the graphene solution is an RGO solution, the graphene solution comprises graphene in an amount of 0.1 wt% to 2.0 wt%, and if the graphene solution is graphene powder/platelets, the graphene solution comprises graphene in an amount of 0.1 wt% to 20 wt%.

4. The method of claim 1, wherein the metallic material used in the preparing of the graphene-metal mixtures comprises at least one selected from the group consisting of magnesium (Mg), nickel (Ni), zinc (Zn), copper (Cu), and chromium (Cr).

5. The method of claim 1, wherein the organic solvent used in the preparing of the graphene-metal mixtures are ethanol or isopropyl alcohol.

6. The method of claim 1, wherein the graphene-metal mixtures have a metal content/graphene content ratio of 1:1 or greater.

7. The method of claim 1, wherein the graphene-metal mixtures comprises at least one selected from the group consisting of graphene-Mg, graphene-Ni, graphene-Zn, graphene-Cu, and graphene-Cr.

8. A method for manufacturing a high-performance surface-treated steel sheet, the method comprising:
coating a base steel sheet with the composition for a metal surface treatment prepared by the method of any one of claims 1 to 7; and
drying the coated base steel sheet.

9. The method of claim 8, wherein the coating of the base steel sheet is performed by an electrophoretic deposition (EPD) method.

10. A high-performance surface-treated steel sheet comprising a base steel sheet and a graphene layer formed on the base steel sheet.
